# EUROPEAN PATENT APPLICATION

(11) **EP 4 810 362 A1**
(43) Date of publication of application: **23.09.2026**
(21) Application number: 25223352.3
(22) Date of filing: 15.12.2025
(51) Int. Cl.: B62K 3/00, B62K 15/00

(54) **SLANT ROD FOLDING MECHANISM FOR ELECTRIC SCOOTER**

(30) Priority: 28.08.2025 CN 202511219228
(71) Applicant: Twy Group, Inc., City of Industry, CA 91748 (US)
(72) Inventor: Ye, Rongjie, CITY OF INDUSTRY CA, 91748 (US); Gong, Linhai, CITY OF INDUSTRY CA, 91748 (US)
(74) Representative: Metida

(57) **Abstract**

The present disclosure relates to a slant rod folding mechanism for an electric scooter, including a pedal frame, a slant rod and a folding device, the slant rod including an upper slant rod and a lower slant rod, the upper slant rod and the lower slant rod being connected via the folding device, and the upper slant rod being able to rotate via a pin shaft. The folding device includes a handle, a first hinge portion, a second hinge portion, and a tension adjustment portion. The first hinge portion includes a push-pull locking block I, a joint middle latch, and a tension spring. The push-pull locking block I is hinged with the handle and is provided with a joint middle latch capable of extending out of the upper slant rod and being clamped in a clamping slot.

## Description

### TECHNICAL FIELD

The present disclosure belongs to the field of electric scooters or electric folding bicycles, and more particularly to a slant rod folding mechanism.

### BACKGROUND

In the design of electric scooters and electric bicycles, the folding function undoubtedly brings great convenience for users in carrying and storage. As a key component enabling this function, the performance of the folding slant rod directly affects riding safety and equipment service life. However, the folding slant rods of most products on the market have design issues that cannot be overlooked, mainly focusing on aspects such as insufficient locking stability, low safety factor, and lack of tension adjustment functionality.

Firstly, insufficient locking stability is the most prominent safety hazard of folding slant rods. In many products, the folding slant rod is secured only by a simple locking handle, allowing the slant rod to be easily folded when the user pulls the locked handle. This design harbors significant risks during daily use: during riding, if the locking mechanism becomes loose due to vibration, wear, or other reasons, it may cause the locked handle to open accidentally, resulting in sudden folding of the slant rod, instantaneous destruction of the vehicle's balance structure, and a high risk of causing the rider to fall and get injured. Especially in complex road conditions or at high speeds, the consequences of such sudden incidents are often more severe, ranging from minor vehicle damage to serious threats to the rider's life safety.

Secondly, the safety of existing designs is difficult to meet practical usage requirements. The operational logic-folding enabled simply by pulling the locked handle-results in an excessively low threshold for unintended folding of the slant rod. For example, during vehicle parking, if a child accidentally touches the locked handle, it may cause the slant rod to fold suddenly, potentially injuring the child as well as causing the vehicle to topple over and be damaged. Moreover, for vehicles with long service lives, the wear of the locking mechanism will further reduce the reliability. Even during normal riding, users need to constantly worry about whether the slant rod might fold unexpectedly, experiencing a significant psychological burden on the riding experience.

Furthermore, folding slant rod devices generally lack tension adjustment functionality, and such a deficiency directly impacts equipment service life and long-term safety. During prolonged use, components and parts at the folding section naturally wear due to repeated folding, vibration, and other factors, leading to a gradual loss of tension in the device. Since the tension cannot be adjusted, the locking force will continuously decrease over time, allowing for possible slight waggling of the slant rod even in the locked state. Such waggling will not only affect the stability and comfort of riding, but also accelerate the wear of the locking mechanism and the slant rod connecting section, forming a vicious cycle, which may eventually lead to the complete failure of the locking mechanism, causing a serious safety accident.

In summary, the problems in the locking stability, safety design, and tension adjustment function of the folding slant rod of electric scooters and electric bicycles not only affect the user experience and service life of the product, but also pose a potential threat to the rider's personal safety.

### SUMMARY

In view of the shortcomings of the existing slant rod folding mechanisms, the present disclosure improves the performance and safety of folding slant rods by optimizing the design of the locking mechanism, enhancing the level of safety protection, and adding a tension adjustment function, etc. so as to provide users with more reliable and safer travel tools.

In order to achieve the above object, according to one aspect of the present disclosure, the present disclosure is achieved by the following technical measures: a slant rod folding mechanism for an electric scooter, comprising: a pedal frame, a slant rod, and a folding device, wherein the slant rod is connected to one side of the pedal frame, the slant rod is composed of an upper slant rod and a lower slant rod, the upper slant rod and the lower slant rod are connected by the folding device, and the upper slant rod can be folded or unfolded via the folding device, wherein
the lower slant rod is provided with an insertion slot, a clamping slot is further provided on the lower slant rod on two sides of the insertion slot, a lower end of the upper slant rod is inserted into the insertion slot and fixed by a pin shaft, and the pin shaft enables the upper slant rod to rotate;
the folding device comprises a handle, a first hinge portion, a second hinge portion, and a tension adjustment portion;
the first hinge portion comprises a push-pull locking block I, a joint middle latch, and a tension spring, the push-pull locking block I is hinged to one side of the handle, a non-hinged side of the push-pull locking block I is provided with the joint middle latch, two sides of the joint middle latch extend through the upper slant rod and can be clamped in the clamping slot, the tension spring provides a locking force for the joint middle latch, and the upper slant rod is further provided with a moving slot for a movement of the joint middle latch;
the second hinge portion comprises a push-pull locking block II and a push-pull locking block III, the push-pull locking block II is hinged to the other side of the handle opposite to the push-pull locking block I, and the push-pull locking block III is hinged to the push-pull locking block II;
the tension adjustment portion comprises an adjustment seat, an adjustment bolt, a spring, and a fixing seat, the fixing seat is arranged on the upper slant rod, the adjustment bolt passes through the fixing seat and is fixed to the adjustment seat, the adjustment bolt between the adjustment seat and the fixing seat is provided with the spring, the adjustment seat is fixed to the push-pull locking block III by means of a fixing bolt, and the upper slant rod is provided with a tension adjustment slot allowing a movement of the fixing bolt; and
the handle is operated by reciprocating rotation to control whether the joint middle latch engages with or disengages from the clamping slot, thereby controlling whether the folding device locks the upper slant rod.

The slant rod folding mechanism hinges the first hinge portion and the second hinge portion on both sides of the handle. In use, the handle is first pried open and then pulled, causing the joint middle latch to move to be clamped in the clamping slot, thus locking the upper slant rod and the lower slant rod. Such opening twice operation ensures high safety. The first hinge portion and the second hinge portion are oppositely arranged to provide a supporting force, enhancing safety during use. To open it, the handle must be pulled to disengage the joint middle latch from the clamping slot to realize unlocking, ensuring stability. The tension adjustment portion is provided, and by rotating the adjustment bolt, controlling the position of the adjustment seat is realized. The supporting force of the push-pull locking block III and the push-pull locking block II is thus adjusted, so as to ultimately adjust the tension.

Furthermore, the lower slant rod comprises two side plates and a baffle plate arranged below the two side plates, the baffle plate being composed of an upper baffle plate and a lower baffle plate, and an elastic force resisting block being provided on the upper baffle plate for the upper slant rod to abut against.

Furthermore, the two side plates are provided with a clamping slot, an arc face is provided on the side plate at one side of the clamping slot, a resisting head is provided at a lower end of the arc face, and the resisting head is located at a folding side of the upper slant rod; and when the upper slant rod and the lower slant rod are in a folded state, the joint middle latch disengages from the clamping slot and abut against the resisting head along the arc face, and at this time, the spring is in an unstretched state.

Furthermore, two springs are provided and arranged respectively at two ends of the push-pull locking block I, one side of each spring being provided on the joint middle latch, the other side being provided with a latch, and the latch being fixed with the inside of the upper slant rod.

Furthermore, a gasket and a snap ring are further provided on each side of the joint middle latch, and the gasket and the snap ring are located on the joint middle latch between the upper slant rod and the lower slant rod.

Furthermore, one side of the handle is provided with two L-shaped connecting blocks, the push-pull locking block I and the push-pull locking block II each being provided with a hinge head, and by the hinge head, the push-pull locking block I and the push-pull locking block II being inserted between the two L-shaped connecting blocks, and the two L-shaped connecting blocks being hinged to the push-pull locking block II and the push-pull locking block III by means of a screw.

Furthermore, the upper slant rod at the two L-shaped connecting blocks is provided with an interpenetration slot, the interpenetration slot enables the two L-shaped connecting blocks to be positioned within the upper slant rod, and the insertion slot is provided with two extension slots. The extension slots allow the two L-shaped connecting blocks to movably perform an insertion when the handle is opened.

Furthermore, hinge heads are provided at two ends of the push-pull locking block II, one end is hinged to the L-shaped connecting block, and the other end is with the push-pull locking block III; and the push-pull locking block III is provided with a locking transverse plate, and the locking transverse plate serves as a connecting component of the adjustment seat.

Furthermore, the locking transverse plate and the adjustment seat are fixed by two fixing bolts.

Compared with the prior art, the advantages of the present disclosure reside in: by optimizing the design of the locking mechanism, improving the safety protection level, and adding a tension adjustment function such that the performance and safety of the folding slant rod are enhanced, thereby providing users with a more reliable and safer travel tool.

### BRIEF DESCRIPTION OF DRAWINGS

The accompanying drawings, which are included to provide a further understanding of the disclosure and are incorporated in and constitute a part of this description, illustrate exemplary implementation modes of the disclosure and together with the description serve to explain the principles of the disclosure. In the drawings:
Fig. 1 is a schematic structural view of a slant rod folding mechanism for an electric scooter according to the present disclosure.
Fig. 2 is a schematic view showing a structure of a lower slant rod according to the present disclosure.
Fig. 3 is a schematic view showing a structure of an elastic force resisting block according to the present disclosure.
Fig. 4 is a schematic exploded view of a folding device according to the present disclosure.
Fig. 5 is an assembly drawing of Fig. 4.
Fig. 6 is a schematic view showing a bottom structure of an upper slant rod according to the present disclosure.

In the figures, the reference numerals are specifically:
1, pedal frame; 2, slant rod; 3, folding device; 4, upper slant rod; 5, lower slant rod; 6, insertion slot; 7, clamping slot; 8, pin shaft; 9, handle; 10, first hinge portion; 11, second hinge portion; 12, tension adjustment portion; 13, push-pull locking block I; 14, joint middle latch; 15, tension spring; 16, push-pull locking block II; 17, push-pull locking block III; 18, adjustment seat; 19, adjustment bolt; 20, spring; 21, fixing seat; 22, tension adjustment slot; 23, moving slot; 24, side plate; 25, baffle plate; 26, elastic force resisting block; 27, arc face; 28, resisting head; 29, gasket; 30, snap ring; 31, L-shaped connecting block; 32, interpenetration slot; 33, extension slot; 34, hinge head; 35, fixing bolt; and 36, latch.

### DETAILED DESCRIPTION OF THE EMBODIMENTS

Spatially relative terms, such as "under", "below", "beneath", "lower", "above", "over", "upper", and "side" (e.g., as in "sidewall"), may be used herein for descriptive purposes to describe one element's relationship to another (other) element(s) as illustrated in the figures. Spatially relative terms are also intended to encompass different orientations of the device in use, operation and/or manufacture in addition to the orientation depicted in the figures. For example, the scenario that if the device in the figures is turned over, elements described as "under" or "beneath" other elements or features would then be oriented "over" the other elements or features. At that, the exemplary term "below" can encompass both an orientation of "above" and "below". Moreover, the devices may be otherwise oriented (e.g., rotated 90 degrees or at other orientations) and, as such, the spatially relative descriptors used herein are interpreted accordingly.

### Embodiment 1

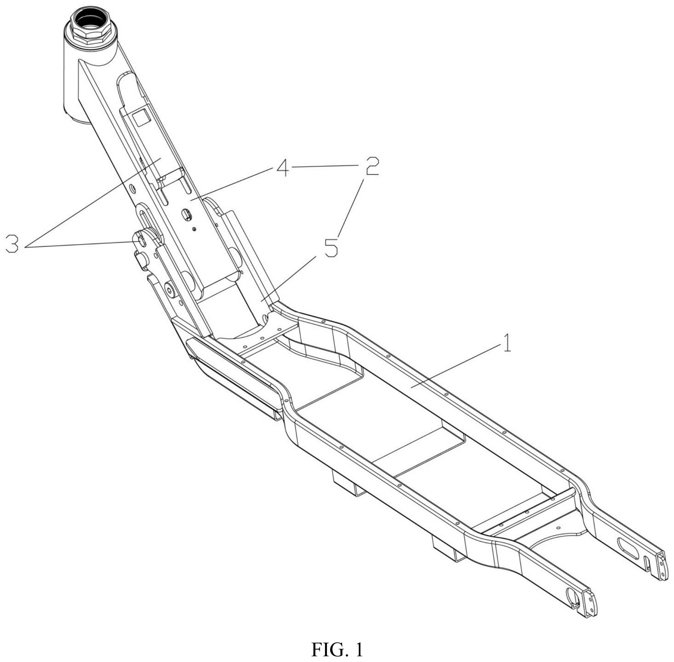

With reference to Fig. 1, a slant rod folding mechanism for an electric scooter according to the present embodiment includes: a pedal frame 1, a slant rod 2, and a folding device 3 (when the slant rod folding mechanism is configured to be used for an electric bicycle, the pedal frame is a bicycle frame). A lower end of the slant rod 2 is connected to the left side of the pedal frame 1, and the slant rod 2 consists of an upper slant rod 4 and a lower slant rod 5. The upper slant rod 4 and the lower slant rod 5 are connected via the folding device 3, enabling the upper slant rod 4 to be folded or unfolded through the folding device 3.

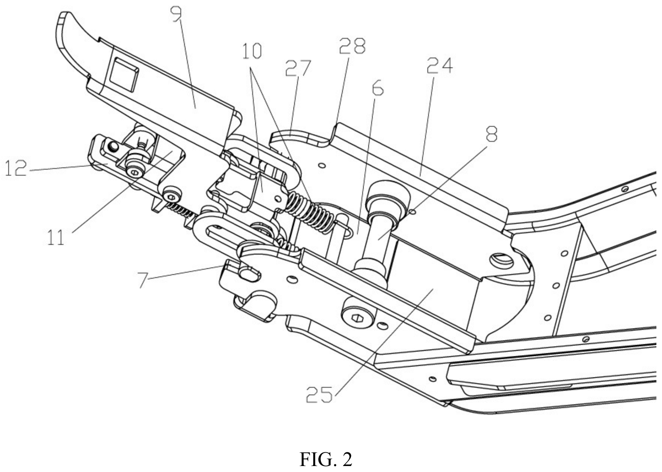

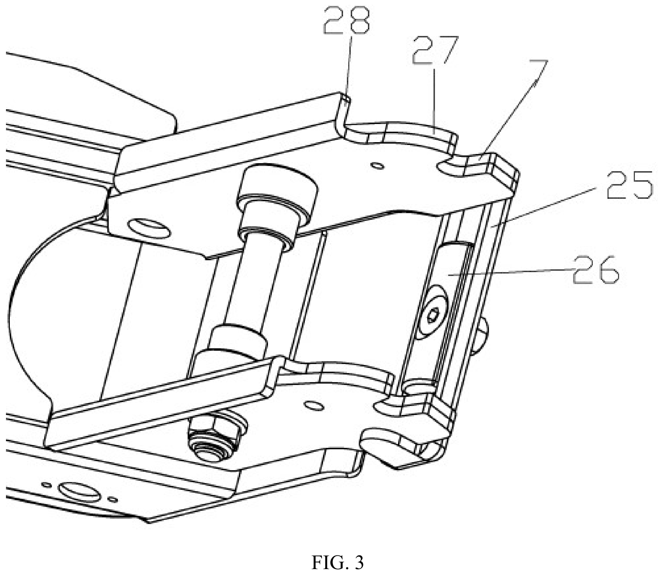

With reference to Fig. 2 and Fig. 3, the lower slant rod 5 is composed of two side plates 24 and two baffle plates 25 connecting the lower ends of the two side plates 24, thereby forming an insertion slot 6 in the lower slant rod 5. On the two side plates 24 at the left end of the insertion slot 6, a clamping slot 7 is further provided. On the side plate 24 on the upper end of the clamping slot 7, an arc face 27 is formed, with a resisting head 28 located to the right side of the arc face 27. The right side of the upper slant rod 4 is inserted into the insertion slot 6 and fixed by a pin shaft 8, and the pin shaft 8 allows the upper slant rod 4 to rotate.

Further, a detachable elastic force resisting block 26 is installed on the upper end of the left-side baffle plate 25, such that the resisting function and noise reduction can be realized when the upper slant rod 4 is unfolded. Besides, it can be freely replaced after prolonged use. The folding device 3 comprises a handle 9, a first hinge portion 10, a second hinge portion 11, and a tension adjustment portion 12.

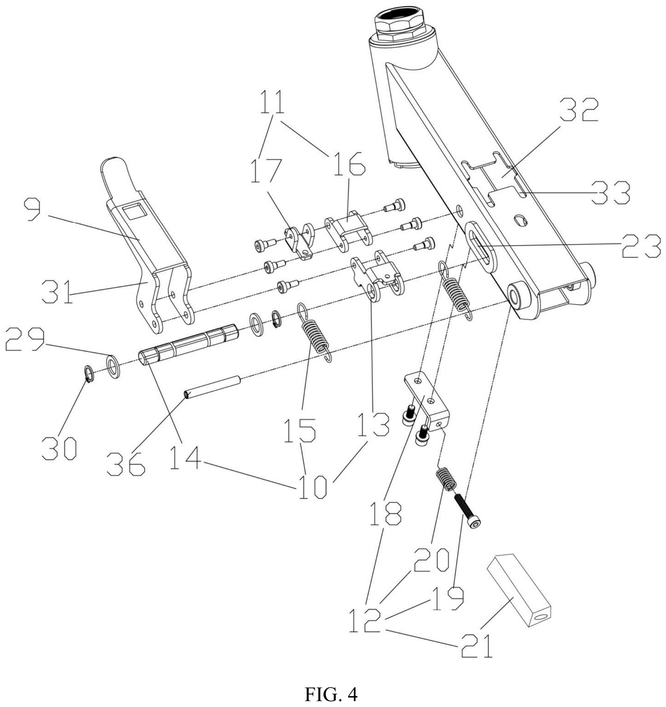

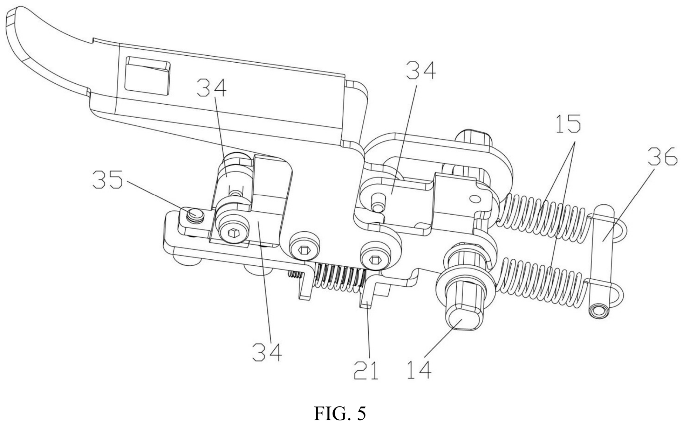

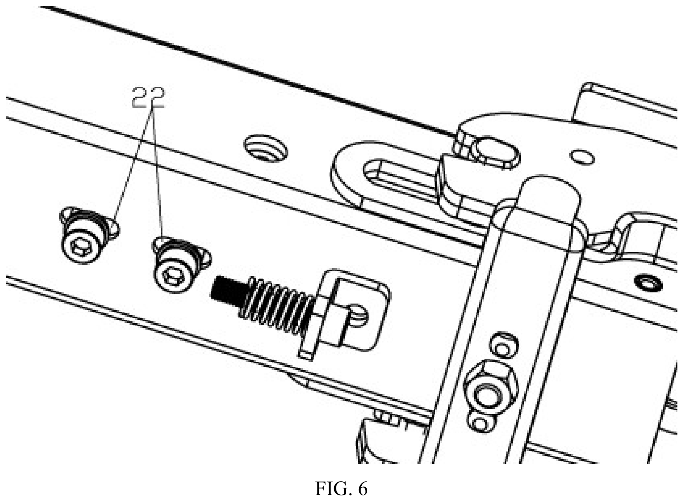

With reference to Fig. 4 to Fig. 6, two L-shaped connecting blocks 31, spaced apart and perpendicular to the handle 9, are fixed on the right side of the handle 9. The first hinge portion 10 comprises a push-pull locking block I 13, a joint middle latch 14, a tension spring 15, and a latch 36. The left side of the push-pull locking block I 13 is hinged to the right side of the handle 9. The joint middle latch 14 is inserted into the right side of the push-pull locking block I 13. Both ends of the joint middle latch 14 extend out of the upper slant rod 4 and are clamped within the clamping slot 7. Two tension springs 15 are provided. One end of each tension spring 15 is hooked onto the joint middle latch 14 located on the outer side of the first hinge portion 10, while the other end is hooked onto the latch 36. The latch 36 is inserted into the upper slant rod 4, keeping the tension springs 15 in a straightened state but without generating tension. A moving slot 23 is provided on the upper slant rod 4 to allow the movement of the joint middle latch 14. The second hinge portion 11 comprises a push-pull locking block II 16 and a push-pull locking block III 17. The push-pull locking block II 16 is hinged to the left side of the handle 9, opposite to the push-pull locking block I 13. The push-pull locking block III 17 is hinged to the push-pull locking block II 16. The tension adjustment portion 12 comprises an adjustment seat 18, an adjustment bolt 19, a spring 20, and a fixing seat 21. The fixing seat 21 is fixed to the upper slant rod 4. The adjustment bolt 19 extends horizontally through the fixing seat 21 and is screwed into the adjustment seat 18. The adjustment bolt 19 between the adjustment seat 18 and the fixing seat 21 is sleeved with the spring 20. The adjustment seat 18 is secured to the push-pull locking block III 17 by two fixing bolts 35, and a tension adjustment slot 22 is machined on the upper slant rod 4 to allow the movement of the fixing bolt 35.

Preferably, a gasket 29 and a snap ring 30 are provided on two sides of the joint middle latch 14, with the gasket 29 and snap ring 30 being arranged on the joint middle latch 14 between the upper slant rod 4 and the lower slant rod 5 to serve as a limiting function; and of course, to cooperate with the limiting function, an annular slot is formed on the joint middle latch 14 for hooking engagement with the snap ring 30 and the tension spring 15. To facilitate hinging, both the push-pull locking block I 13 and push-pull locking block II 16 are provided with a hinge head 34, and by the hinge head 34, the push-pull locking block I 13 and push-pull locking block II 16 are inserted between two L-shaped connecting blocks 31, and the two L-shaped connecting blocks 31 are hinged to the push-pull locking block II 16 and push-pull locking block III 17 by means of screws. Meanwhile, the lower end of the push-pull locking block III 17 is a locking transverse plate, which serves as a connecting component for the adjustment seat.

In a using state, the aforementioned joint middle latch 14 is inserted into the clamping slot 7. At this moment, the two tension springs 15 are under tension states to provide a pulling force to the joint middle latch 14, so that the joint middle latch 14 cannot disengage from the clamping slot 7. The first hinge portion 10 and the second hinge portion 11 are in a horizontal state. When folding is required, the handle 9 is first pried open, so that the first hinge portion 10 and the second hinge portion 11 are in an unlocked state; then the handle 9 is pulled upward such that the pulling motion of the handle 9 drives the push-pull locking block I 13 to move leftward, thereby driving the joint middle latch 14 to move and further stretching the tension springs 15. At that, the joint middle latch 14 disengages from the clamping slot 7. After the handle 9 is released, due to the resetting of the tension spring 15, the joint middle latch 14 abuts against the resisting head 28 across the arc face 27, at which time the upper slant rod 4 can fold toward the lower slant rod 5. After long-term use or when tension adjustment is needed, the user rotates the adjustment bolt 19, causing the adjustment seat 18 to undergo a slight positional adjustment, the extent of which is controlled by the length of the tension adjustment slot 22, thereby adjusting the angle formed between the push-pull locking block II 16 and the push-pull locking block III 17, and thus adjusting the locking force of the upper slant rod 4.

In the illustration of the present description, descriptions with reference to terms of "one embodiment/implementation mode", "some embodiments/implementation modes", "examples", "specific examples", or "some examples" etc. mean that specific features, structures, materials, or characteristics described in conjunction with the embodiment/implementation mode or example are included in at least one embodiment/implementation mode or example of the present application. In the present description, schematic representations of the above terms do not necessarily refer to the same embodiments/implementation modes or examples. Furthermore, the specific features, structures, materials, or characteristics described may be combined in a suitable manner in any one or more embodiments//implementation modes or examples. Moreover, various embodiments//implementation modes or examples as well as features of various embodiments//implementation modes or examples described in the present description may be incorporated and combined by those skilled in the art without mutual contradiction.

Furthermore, the terms "first" and "second" are used for descriptive purposes only and are not to be construed as indicating or implying relative importance or implicitly indicating the number of technical features indicated. Therefore, a feature defined as "first" or "second" may explicitly or implicitly comprise at least one of the features. In the description of the present application, "a plurality" means at least two, for example, two, three, etc., unless otherwise specifically defined.

It should be understood by those skilled in the art that the above implementation modes are merely for clarity of the description of the present disclosure, and are not intended to limit the scope of the present disclosure. For those skilled in the art, various changes or modifications may be made based on the above disclosure, and such changes or modifications are still within the scope of the present disclosure.

## Claims

1. A slant rod folding mechanism for an electric scooter, comprising: a pedal frame, a slant rod, and a folding device, wherein the slant rod is connected to one side of the pedal frame, the slant rod is composed of an upper slant rod and a lower slant rod, the upper slant rod and the lower slant rod are connected by the folding device, and the upper slant rod can be folded or unfolded via the folding device, wherein
the lower slant rod is provided with an insertion slot, a clamping slot is further provided on the lower slant rod on two sides of the insertion slot, a lower end of the upper slant rod is inserted into the insertion slot and fixed by a pin shaft, and the pin shaft enables the upper slant rod to rotate;
the folding device comprises a handle, a first hinge portion, a second hinge portion, and a tension adjustment portion;
the first hinge portion comprises a push-pull locking block I, a joint middle latch, and a tension spring, the push-pull locking block I is hinged to one side of the handle, a non-hinged side of the push-pull locking block I is provided with the joint middle latch, two sides of the joint middle latch extend through the upper slant rod and can be clamped in the clamping slot, the tension spring provides a locking force for the joint middle latch, and the upper slant rod is further provided with a moving slot for a movement of the joint middle latch;
the second hinge portion comprises a push-pull locking block II and a push-pull locking block III, the push-pull locking block II is hinged to the other side of the handle opposite to the push-pull locking block I, and the push-pull locking block III is hinged to the push-pull locking block II;
the tension adjustment portion comprises an adjustment seat, an adjustment bolt, a spring, and a fixing seat, the fixing seat is arranged on the upper slant rod, the adjustment bolt passes through the fixing seat and is fixed to the adjustment seat, the adjustment bolt between the adjustment seat and the fixing seat is provided with the spring, the adjustment seat is fixed to the push-pull locking block III by means of a fixing bolt, and the upper slant rod is provided with a tension adjustment slot allowing a movement of the fixing bolt; and
the handle is operated by reciprocating rotation to control whether the joint middle latch engages with or disengages from the clamping slot, thereby controlling whether the folding device locks the upper slant rod.

2. The slant rod folding mechanism for an electric scooter according to claim 1, wherein the lower slant rod comprises two side plates and a baffle plate arranged below the two side plates, the baffle plate being composed of an upper baffle plate and a lower baffle plate, and an elastic force resisting block being provided on the upper baffle plate for the upper slant rod to abut against.

3. The slant rod folding mechanism for an electric scooter according to claim 2, wherein the two side plates are provided with a clamping slot, an arc face is provided on the side plate at one side of the clamping slot, a resisting head is provided at a lower end of the arc face, and the resisting head is located at a folding side of the upper slant rod; and when the upper slant rod and the lower slant rod are in a folded state, the joint middle latch disengages from the clamping slot and abut against the resisting head along the arc face, and at this time, the spring is in an unstretched state.

4. The slant rod folding mechanism for an electric scooter according to claim 3, wherein two springs are provided and arranged respectively at two ends of the push-pull locking block I, one side of each spring being provided on the joint middle latch, the other side being provided with a latch, and the latch being fixed with an inside of the upper slant rod.

5. The slant rod folding mechanism for an electric scooter according to claim 3, wherein a gasket and a snap ring are further provided on each side of the joint middle latch, and the gasket and the snap ring are located on the joint middle latch between the upper slant rod and the lower slant rod.

6. The slant rod folding mechanism for an electric scooter according to claim 1, wherein one side of the handle is provided with two L-shaped connecting blocks, the push-pull locking block I and the push-pull locking block II each being provided with a hinge head, and by the hinge head, the push-pull locking block I and the push-pull locking block II being inserted between the two L-shaped connecting blocks, and the two L-shaped connecting blocks being hinged to the push-pull locking block II and the push-pull locking block III by means of a screw.

7. The slant rod folding mechanism for an electric scooter according to claim 6, wherein the upper slant rod at the two L-shaped connecting blocks is provided with an interpenetration slot, the interpenetration slot enables the two L-shaped connecting blocks to be positioned within the upper slant rod, and the insertion slot is provided with two extension slots, the extension slots allowing the two L-shaped connecting blocks to movably insert when the handle is opened.

8. The slant rod folding mechanism for an electric scooter according to claim 6, wherein hinge heads are provided at two ends of the push-pull locking block II, one end is hinged to the L-shaped connecting block, and the other end is with the push-pull locking block III; and the push-pull locking block III is provided with a locking transverse plate, and the locking transverse plate serves as a connecting component of the adjustment seat.

9. The slant rod folding mechanism for an electric scooter according to claim 8, wherein the locking transverse plate and the adjustment seat are fixed by two fixing bolts.
